# EUROPEAN PATENT APPLICATION

(11) **EP 4 411 256 A1**
(43) Date of publication of application: **07.08.2024**
(21) Application number: 24153963.4
(22) Date of filing: 25.01.2024
(51) Int. Cl.: F24D 10/00, F24D 19/00, A47B 47/03, E05B 63/00, E05C 3/00

(54) **A DISTRICT HEATING SYSTEM CABINET WITH A LOCKING MECHANISM, AND A LOCK BOLT FOR SUCH LOCKING MECHANISM**

(30) Priority: 03.02.2023 DK PA202370068
(71) Applicant: FRESE A/S, 4200 Slagelse (DK)
(72) Inventor: HEIDE, Thomas, 4200 Slagelse (DK); PEDERSEN, Per Dyrehave, 5700 Svendborg (DK)
(74) Representative: AWA Denmark A/S

(57) **Abstract**

A district heating system cabinet for being mounted on a building wall comprises a locking mechanism comprising a movable lock bolt mounted on a back plate inside the cabinet spacing, the movable lock bolt being movable between a locked position and an unlocked position, the lock bolt in the locked position locking the cabinet frame to the back plate, the lock bolt in the unlocked position releasing a cabinet frame from the back plate so that the cabinet frame can be removed from the back plate. A lock bolt for a locking mechanism for locking a cabinet frame of a district heating system cabinet to a back plate of the district heating system cabinet is also disclosed.

## Description

In a first aspect, the present invention relates to a district heating system cabinet according to the introductory part of claim 1.

Such district heating system cabinets are well known in the art. They are usually mounted on a building wall of a building to which district heating system components in the cabinet spacing provide district heating. Supply and return tubing typically extends from the district heating supply grid from the ground through the bottom opening of the cabinet and into the cabinet to be connected to the components inside the cabinet. The cabinet shields the components inside from the surrounding environment and can prevent unauthorized access to the components inside. For the latter purpose, the cabinet door can often be locked with a special key to which only authorized operators have access.

When an operator is to provide maintenance to the components inside the cabinet, it is often advantageous to remove the cabinet frame from the cabinet to provide more working room. To this end, prior art cabinets often include screw connections that attach the cabinet frame to the back plate of the cabinet, the back plate of the cabinet being mounted on the building wall. Having opened the cabinet door, the operator uses a tool, such as a screw driver or wrench, to release the screw connection and, then, removes the cabinet frame from the back plate. Upon releasing the screw connection, one or more screws or threaded nuts can easily be dropped and can be difficult to find on the ground.

On this background, it may be an object of the present invention to provide a district heating system cabinet which allows for easier access to maintenance of district heating system components, such as one or more valves and/or tubing, provided in the cabinet spacing.

According to the first aspect of the present invention, this objective may be met by a district heating system cabinet according to the introductory part of claim 1, wherein the district heating system cabinet is characterized by the characterizing part of claim 1.

Since such a movable lock bolt can be provided to be activated by hand without the use of a separate special tool, such as a screwdriver or wrench, the first aspect of the invention may allow for easier access to maintenance of district heating system components, such as one or more valves and/or tubing, that may be provided in the cabinet spacing when the cabinet has been mounted to e.g. a building wall. Accordingly, the movable lock bolt may be movable between the locked position and the unlocked position by hand, such as an operator's hand, without the use of a separate and/or special tool.

If a special key is required to open the cabinet door, since the movable lock bolt is provided inside the cabinet spacing, only an operator with access to the special key will be able to open the cabinet door to be able to disengage the moving lock bolt to be able to remove the cabinet frame from the back plate. Accordingly, the cabinet may further comprise a door lock with a keyhole. Activation of such door lock locks the cabinet door in a closed position of the cabinet door. Hereby, an operator can first gain access to the cabinet spacing through the door by using a key to unlock the door lock. Then, the operator can engage or disengage the movable lock bolt to lock or release, respectively, the cabinet frame from the back plate. The operator can then remove the cabinet frame from the back plate which provides room to work on district heating system components accommodated in the cabinet spacing. The key may be a special key so that unauthorized access to the cabinet spacing can be prevented when the cabinet door is locked.

Thus, the cabinet may include a door lock key. The door lock may include lock casing which may potentially be provided in the cabinet door. The lock casing may include a keyhole. A movable, such as rotatable, lock bolt of the door lock may engage one of the side plates, the top plate, or a front plate of the cabinet frame. The lock bolt may be a rotating and/or sliding lock bolt.

Since the movable lock bolt is movably mounted on the back plate, the operator does not risk dropping the movable lock bolt on the ground when moving the lock bolt between the locked and released positions.

The movable lock bolt may be mounted to be undetachable from the back plate or undetachable from the back plate without the use of a separate and/or special tool, such as a screwdriver or wrench.

The movable lock bolt may not include any threads or threading.

The movable lock bolt may be rotating, sliding, or otherwise movable in order to move between its locked and released positions to engage and disengage, respectively, the movable lock bolt.

The lock bolt may generally be, and/or may alternatively be designated, a latch, pawl, ratchet, latch, catch, click, detent, bar, and/or rail.

The lock bolt may be formed, such as bent or folded from, and or cut and/or punched, from a plate and/or from a blank or workpiece.

The lock bolt may be plate-shaped and/or may have an oblong shape.

The lock bolt may at one end include a through-hole for a screw, rivet, threaded rod, or the like, in particular if the movable lock bolt is a rotatable, potentially oblong, lock bolt, see also further below. A screw, rivet, threaded rod, or the like may be inserted through the through-hole and may be attached to the back plate, potentially so as to movably attach the movable lock bolt to the back plate.

The locking mechanism and/or the movable lock bolt may be positioned at the back plate at a bottom corner of the cabinet frame.

The locking mechanism may be a first locking mechanism, the locking mechanism being a first locking mechanism, the moveable lock bolt being a first movable lock bolt. The first locking mechanism and/or the first movable lock bolt may be positioned at the back plate at a first bottom corner of the cabinet frame. In addition, the cabinet may include a second locking mechanism comprising a second movable lock bolt. The second locking mechanism and/or the second movable lock bolt may be positioned at the back plate at a second, opposite bottom corner of the cabinet frame. The second locking mechanism and/or second movable lock bolt may be identical, potentially identical but mirrored, to the first locking mechanism and/or first movable lock bolt, respectively. If the second locking mechanism and/or second movable lock bolt is/are mirrored, a mirror plane of the mirroring may extend from top to bottom and from the door towards the back plate

The cabinet may include at least one mounting bracket, such as two mounting brackets, for mounting district heating system components inside. The mounting bracket may be mounted on the back plate and/or may be provided in the cabinet spacing when the cabinet frame is attached to the back plate.

The cabinet may include a support mechanism for supporting the cabinet frame on the back plate when the cabinet frame is positioned to be attached to the back plate, potentially before the movable lock bolt is activated to lock the cabinet frame to the back plate. This support mechanism may be provided at a top of the back plate. In the locked position of the movable lock bolt, the movable lock bolt may fixate one portion of the cabinet frame, such as a bottom portion of the cabinet frame, to one portion of the back plate, such as a bottom portion of the back plate. The support mechanism may fixate another portion of the cabinet frame, such as a top portion of the cabinet frame, to another portion of the back plate, such as a top portion of the back plate. The support mechanism may include one or more flanges of the top plate, such one or more flanges engaging one or more associated flanges of the back plate, the associated one or more flanges of the back plate also forming part of the support mechanism. The one or more flanges of the top plate may include a flange extending downwards, and/or the one or more flanges of the back plate may include a flange that extends upwards. Such upwardly extending flange of the back plate may include a recess in and/or on which the downwardly extending flange of the top plate may rest when the cabinet frame is positioned to be attached to the back plate. One or more of the one or more flanges of the top plate may form a bent or folded part of the top plate, potentially folded downwards towards a bottom of the cabinet. Similarly, one or more of the flanges of the back plate may form a bent or folded part of the back plate, potentially folded upwards. The cabinet may include several, such as two, such support mechanisms.

The cabinet door may be hingedly attached to, such as to one of the side plates of, the cabinet frame so that the door is openable, potentially by means of one or more door hinges attached to the cabinet frame and the cabinet door.

The cabinet may further comprise a skirt, which may be mounted to a bottom part of the cabinet frame. Such skirt may include the bottom through-opening of the cabinet. The skirt may comprise two side plates, which may be attached to corresponding associated side plates of the cabinet frame, and/or a front plate. The skirt may be for shielding tubing that connects components in the cabinet spacing to the district heating supply grid. Hereby, the cabinet frame can be mounted to the building wall at a distance from the ground, the skirt extending from a bottom of the cabinet frame towards, to, and/or into the ground.

In an embodiment of the first aspect of the invention, the back plate has a back surface for facing the building wall and a front surface opposite to said back surface, wherein the movable lock bolt is movably mounted to the front surface of the back plate. The front surface of the back plate may be an interior surface of the cabinet extending in parallel with the building wall on which the back plate is to be mounted.

In another embodiment, the back plate comprises a holding element, and the cabinet frame comprises an associated engagement element for engaging the holding element when the cabinet frame is attached to the back plate, wherein the movable lock bolt, in its locked position, engages said engagement element to prevent disengagement of the engagement element from the holding element, and wherein the movable lock bolt, in its released position, disengages the engagement element, so that the cabinet frame can be removed from the back plate. If first and second locking mechanisms and/or movable lock bolts are provided as described above, the cabinet may also comprise a similar, identical, and/or mirrored second engagement element and/or second holding element. The engagement element may be formed as and/or be provided as a bent or folded part of the cabinet frame, in particular of one of the side plates of the cabinet frame. Similarly, the holding element may be formed as and/or be provided as a bent or folded part of the back plate. Each of the engagement element and the holding element may comprise a hook-shaped element, these hook-shaped elements engaging each other when the engagement element engages the holding element, whereby the cabinet frame may be held in position both in the locked and in the released position of the movable lock bolt. Hook-shapes of the hook-shaped elements may be cut or punched in the above-mentioned associated bent or folded part of the side plate and/or back plate, respectively. The holding element and/or the engagement element may be a part of the locking mechanism.

In another embodiment, the movable lock bolt includes a hand or finger grip element, upon activation of which by a hand or finger, the lock bolt can be moved between its locked and released positions. The hand or finger grip element may be bent or folded from a plate-shaped element that also includes the lock portion. The hand or finger grip element may be a gripping wing. The hand or finger grip element may extend from the back plate towards the cabinet door. The hand or finger grip element may extend along substantially an entire length of a lock portion of the movable lock bolt. The movable lock bolt may be movable by an operator gripping the hand or finger grip element with a thumb and one or more other fingers of one hand, the operator then pushing the lock bolt sidewards and/or rotating the lock bolt.

In another embodiment, the movable lock bolt comprises a surface that engages a surface of the engagement element when the lock bolt is moved to the locked position from the released position and/or vice versa, wherein, potentially, one or both said surfaces is/are tapered, so that the movable lock bolt snaps into position when being moved between the locked and released positions. Such surface may be a side surface of a, potentially plate-shaped, lock portion of the lock bolt.

In another embodiment, the movable lock bolt is rotatable between the locked and released positions. This embodiment may be achieved by rotatably attaching a part, such as one end, of the movable lock bolt to the back plate, such as by means of a threaded rod or the like extending through a through hole of the movable lock bolt and screwed to a screw hole of, or to a threaded nut on the other (exterior) side of, the back plate, a threaded nut potentially being attached to the threaded rod at a surface of the movable lock bolt facing the cabinet door. The movable lock bolt may be rotatably attached to the back plate in a manner whereby the movable lock bolt rotates against friction, the friction potentially being achieved by the above-mentioned threaded nut being tightened to achieve a suitable friction between the movable lock bolt and the back plate or being achieved by a rivet connection, which may improve operation of the movable lock bolt and may reduce the risk of the movable lock bolt unintentionally moving between the locked and released positions. The lock bolt may be rotatable about a rotation axis, which rotation axis may extend substantially in parallel with one or both side plates and/or with the top plate and/or may extend perpendicularly to the back plate.

In an embodiment alternative to the embodiment in which the lock bolt is rotatable, the lock bolt may, for example, slide between the locked and released positions. The lock bolt may, in this case, be a sliding lock bolt, sliding latch, sliding bar, and/or sliding rail. A person skilled in the art can devise other, alternatively moving lock bolts.

In a development of the embodiment immediately above, the movable lock bolt comprises an abutment element which abuts a portion of the back plate and/or of the cabinet frame if it is attempted to rotate the movable lock bolt further after having rotated the movable lock bolt to its locked position so as to prevent the movable lock bolt from rotating past its locked position.

In a development of the embodiment immediately above combined with the embodiment further above which includes the hand or finger grip element, the abutment element is a foot provided at an end of the hand or finger grip element, said end being opposite to a rotating axis of the movable lock bolt, the foot being provided farther from the rotating axis of the movable lock bolt than an engagement surface of the movable lock bolt, the engagement surface of the movable lock bolt being for engaging another part of the cabinet in the locked position of the movable lock bolt, the foot comprising a projection extending towards the back plate. This engagement surface may be provided at a toe end of the foot.

In a second aspect, the present invention relates to a lock bolt according to claim 9. The engagement surface of the lock bolt according to the second aspect of the invention may be tapered, so that the movable lock bolt is adapted to snap into position when being moved between the locked and released positions.

Any one or more of the options and/or embodiments of the district heating system cabinet of the first aspect of the present invention may be combined with any one or more of the other features, options, and/or embodiments of the district heating system cabinet of the first aspect of the present invention. Similarly, any one or more of the options and/or embodiments of the lock bolt of the second aspect of the present invention may be combined with any one or more of the other features, options, and/or embodiments of the lock bolt of the second aspect of the present invention.

Furthermore, the lock bolt according to the second aspect of the invention may include any one or more of the features, options, and/or embodiments described herein for the district heating system cabinet of the first aspect of the present invention. Similarly, the movable lock bolt of the district heating system cabinet according to the first aspect of the invention may include any one or more of the features, options, and/or embodiments described herein for the lock bolt of the second aspect of the present invention.

An embodiment of the second aspect of the present invention involves the use of the lock bolt according to the second aspect of the present invention for a district heating system cabinet. This use may be for a district heating system cabinet according to the first aspect of the present invention, including any one or more of the features, options, and/or embodiments described herein for the district heating system cabinet of the first aspect of the present invention.

In the following description, embodiments of the invention will be described with reference to the schematic drawing, in which:
Fig. 1 shows a perspective view of a detailed embodiment of the district heating system cabinet according to the first aspect of the present invention.
Fig. 2 shows a front view of the cabinet of the embodiment of Fig. 1;
Fig. 3 shows a front view of the cabinet of the embodiment of Fig. 1, wherein a cabinet door has been removed;
Fig. 4 shows a perspective view of a back plate of the cabinet of Fig. 1;
Fig. 5 shows a perspective view of a cabinet frame of the cabinet of Fig. 1;
Fig. 6 shows detail VI of Fig. 5;
Fig. 7 shows detail VII of Fig. 4, illustrating parts of a locking mechanism, including a movable lock bolt, the movable lock bolt being a lock bolt according to an embodiment of the second aspect of the present invention;
Fig. 8 shows a perspective view of detail VIII of Fig. 3, illustrating the locking mechanism of Fig. 7 with the moveable lock bolt in a locked position;
Fig. 9 shows a perspective view of the lock bolt of Fig. 8;
Fig. 10 shows a front view of the locking mechanism of Fig. 7 with the movable lock bolt of Fig. 8 moved to a released position;
Fig. 11 shows a cross sectional side view of the cabinet of Fig. 1 taken along the line X-X of Fig. 2;
Fig. 12 shows detail XII of Fig. 11;
Fig. 13 shows detail XIII of Fig. 11; and
Fig. 14 shows a front view corresponding to that of Fig. 10 of a locking mechanism of a district heating system cabinet according to another embodiment of the first aspect of the present invention, this embodiment being identical to the embodiment of Fig. 1, except for the movable lock bolt of the locking mechanism being according to another embodiment.

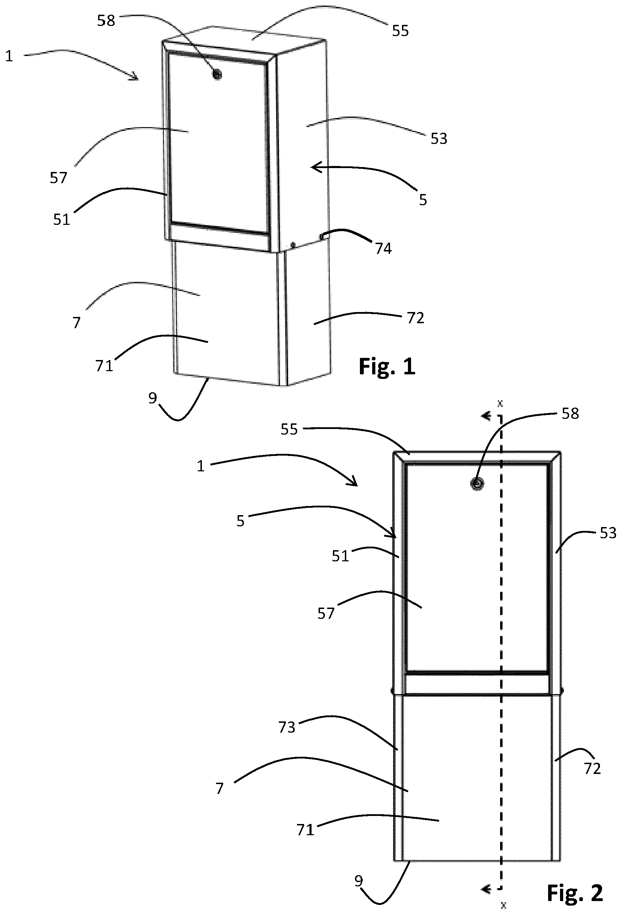

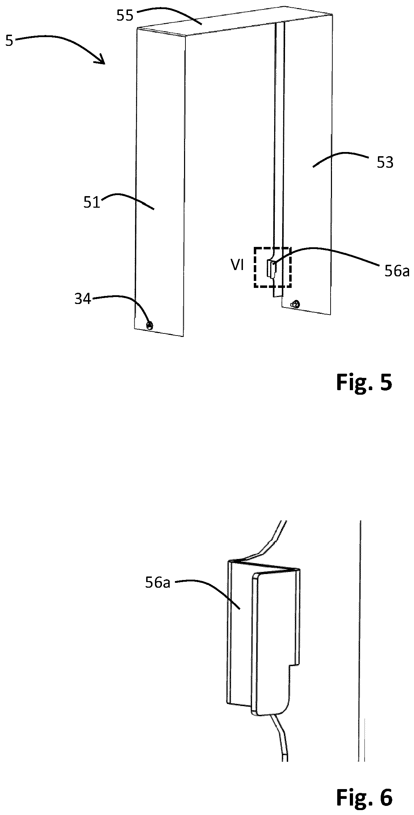

Figs 1 to 13 show different views and details of a district heating system cabinet 1 according to an embodiment of the first aspect of the present invention.

The cabinet 1 is for being mounted on a not shown building wall for accommodating one or more not shown district heating system components, such as one or more valves and/or tubing.

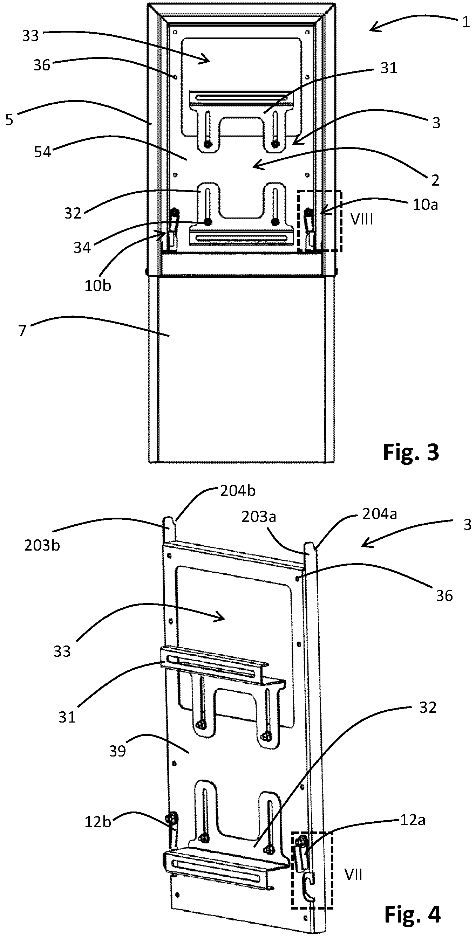

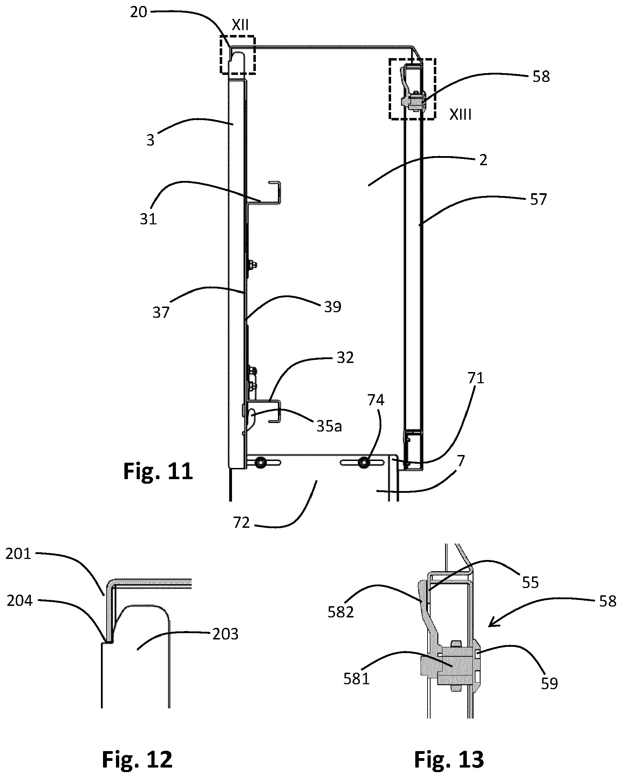

The cabinet 1 comprises a back plate 3, see Figs 3 and 4, for being mounted on the building wall. The back plate 3 has a back surface 37 for facing the building wall and a front surface 39 opposite to said back surface, see Fig. 11. The cabinet 1 further comprises a cabinet frame 5 comprising two side plates 51, 53, a top plate 55, and a cabinet door 57, see Figs 1 to 5 and 11. In Figs 1 to 13, the cabinet frame 5 is removably attached to the back plate 3 so that the cabinet frame 5, cabinet door 57, and back plate 3 define a cabinet spacing 2, See Figs 3 and 11, inside the cabinet 1 when the cabinet frame 5 is attached to the back plate 3 and the cabinet door 57 is closed as shown in Figs 1, 2, and 11. The cabinet spacing 2 is for accommodating the one or more district heating system components. In a closed position of the cabinet door 57, the cabinet door 57 closes a door opening 54, see Fig. 3. The cabinet door 57 is hingedly attached to the side plate 51 of the cabinet frame 5 by means of two not shown door hinges so that the cabinet door 57 is openable.

The top plate 55 and side plates 51, 53, and potentially the back plate 3, each comprises not shown thermal wall insulation that may be provided on an interior and/or exterior side of metal plates of the top plate 55 and side plates 51, 53. The cabinet door 57 can similarly comprise thermal wall insulation. Such thermal wall insulation may alternatively be encapsulated by a plate frame.

The cabinet 1 further comprises a skirt 7, see Figs 1 to 3 and 11, which skirt 7 is mounted to a bottom part of the cabinet frame 5. The skirt comprises two side plates 72, 73, which are attached to corresponding side plates 51, 53, respectively, of the cabinet frame 5 by means of screws 74, and a front plate 71. The skirt 7 is for shielding not shown tubing that connects components in the cabinet spacing 2 to the district heating supply grid (not shown), this tubing extending from the cabinet spacing 2 through the skirt 7 and into the ground (not shown). Hereby, the cabinet frame 5 can be mounted to the building wall at a distance from the ground as the skirt 7 extends from a bottom of the cabinet frame 5 into the ground. A bottom through-opening 9 of the cabinet 1 is defined by the side plates 51, 53, front plate 71, and building wall at a bottom of the skirt 7, see Figs 1 and 2.

Referring to Figs 3 and 4, the cabinet 1 includes two mounting brackets 31, 32 for mounting the not shown district heating system components inside the cabinet spacing 2. The brackets 31, 32 are mounted on the back plate 3 using screws 34 and are provided in the cabinet spacing 2 when the cabinet frame 5 is attached to the back plate 3 as shown in Figs 1 to 3 and 11.

As can be seen e.g. in Fig. 1, each of the side plates 51, 53, top plate 5, cabinet door 57, and back plate 3 has a generally rectangular plate shape and together these elements form a box shape with an open bottom.

The back plate 3 comprises screw holes 36 for connecting the back plate 3 to the not shown building wall by means of not shown screws. The back plate 3 also comprises a through-opening 33 for connecting the one or more district heating system components inside the cabinet 1 to a not shown building heating system positioned inside a not shown building that comprises the not shown building wall. Thus, on the other side of the building wall, a not shown building heating system can be provided to which the one or more district heating system components can be connected to provide district heating to the building.

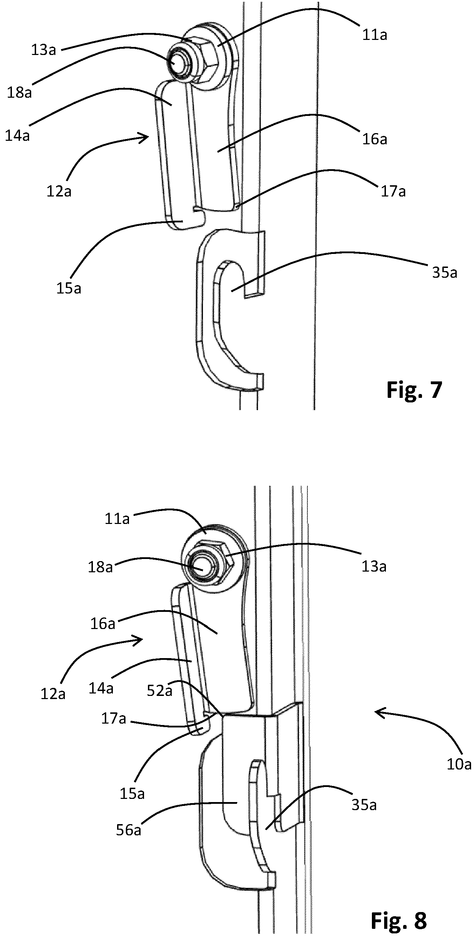

As shown in e.g. Fig. 3, the cabinet 1 comprises a first locking mechanism 10a and a second locking mechanism 10b, comprising a first movable, in particular rotatable, lock bolt 12a and a second movable, in particular rotatable, lock bolt 12b, respectively, each lock bolt 12a, 12b being according to an embodiment of the second aspect of the present invention, see also Fig. 4. The first lock bolt 12a is shown in more detail in Figs 7 to 10.

As seen in Fig. 3, the first locking mechanism 10a and the first lock bolt 12a are positioned at the back plate 3 at a first (right) bottom corner of the cabinet frame 5, and the second locking mechanism 10b and the second lock bolt 12a are positioned at the back plate 3 at a second (left) bottom corner of the cabinet frame 5.

The second locking mechanism 10b and second lock bolt 12b are identical to, but mirrored with respect to, the first locking mechanism 10a and the first lock bolt 12a, respectively. A corresponding imaginary mirror plane extends from top to bottom of the cabinet 1 and from the cabinet door 57 towards the back plate 3. Therefore, the second locking mechanism 10b is not shown in detail in the drawings.

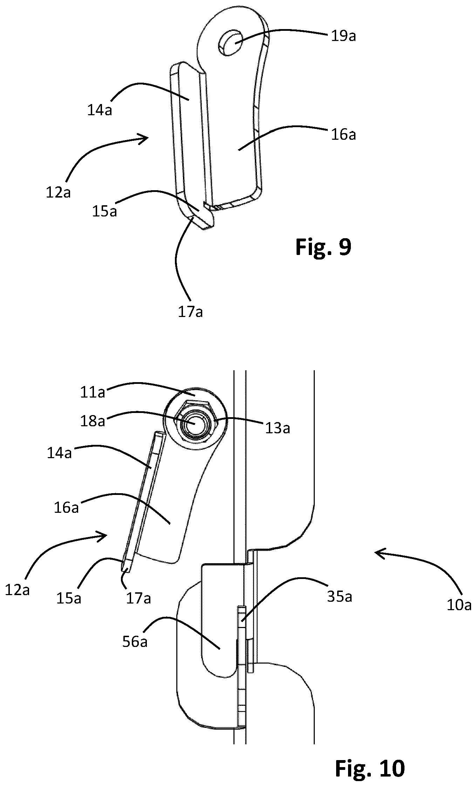

Referring to Figs 7 to 10, the first lock bolt 12a includes a hand or finger grip element 14a, upon activation of which by a hand or finger(s), the movable lock bolt 12a can be moved between its locked position, shown in Figs 3, 4, 7, 8, and 11, and its released position shown in Fig. 10 The hand or finger grip element 14a is bent or folded from a plate-shaped element that also includes a lock portion 16a. This plate-shaped element can be cut or punched before bending or folding. The hand or finger grip element 14a is a gripping wing extending from the back plate 3 towards the cabinet door 57; however, the skilled person will appreciate that it may have different shapes suited for receiving a finger or a hand. The hand or finger grip element 14a extends along a substantially entire length of the lock portion 16a. The movable lock bolt 12a has a generally elongated shape.

The lock bolt 12a is movable by an operator gripping the hand or finger grip element 14a with a thumb and one or more other fingers of one hand, and the operator can then push the movable lock bolt 12a sidewards to rotate the movable lock bolt 12a. The lock bolt 12a is rotatable about a rotation axis that extends in parallel with the side plates 51, 53 and the top plate 55 and extends perpendicularly to the back plate 3. To this end, the lock portion 16a is, at an inner or upper end, rotatably attached or mounted to the front surface 39 of the back plate 3 so that the lock bolt 12a is rotatable around this upper end. To achieve this, the lock potion 16a's upper end includes a through-hole 19a, see Fig. 9, through which a threaded rod 18a is inserted and screwed to a not shown screw hole of a not shown threaded nut on the other (exterior) side of the back plate 3. A washer 11a is positioned between another threaded nut 13a and the lock portion 16a on an interior side of the lock portion 16a. Hereby, the lock bolt 12a is rotatably attached to the back plate 3 in a manner whereby the lock bolt 12a rotates against friction. The friction is achieved by the threaded nut 13a being tightened sufficiently to achieve a suitable friction between the lock portion 16a and the back plate 3, thus reducing the risk of the lock bolt 12a unintentionally moving between its locked, shown in Figs 3, 4, 7, and 8, and released position, shown in Fig. 10.

Referring especially to Figs. 7 and 8, the back plate 3 comprises a holding element 35a, and the cabinet frame 5 comprises an associated engagement element 56a that engages the holding element 35a when the cabinet frame 5 is attached to the back plate 3. The holding element 35a and the engagement element 56a form part of the locking mechanism 10a. In its locked position, see e.g. Fig. 8, the lock bolt 12a is rotated right to engage an upper surface of the engagement element 56a to prevent disengagement of the engagement element 56a from the holding element 35a. In its released position, see Fig. 10, the lock bolt 12a is rotated left to disengage the engagement element 56a so that the cabinet frame 5 can be removed from the back plate 3.

The engagement element 56a is provided as a bent or folded part of the cabinet frame 5, in particular of the side plate 53 of the cabinet frame 5. Similarly, the holding element 35a is provided as a bent or folded part of the back plate 3. Each of the engagement elements 56a and the holding element 35a is a hook-shaped element. The engagement element 56a and the holding element 35a engage each other when the engagement element 56a engages the holding element 35a, whereby the cabinet frame 5 is held in position both in the locked position and in the released position of the lock bolt 12a.

At its outer end opposite to the rotating axis of the lock bolt 12a, the hand or finger grip element 14a comprises an abutment foot 15a, a toe part of which abuts a surface at an upper corner of the holding element 56a if it is attempted to rotate the lock bolt 12a further after having rotated the lock bolt 12a to its locked position so as to prevent the lock bolt 12a from rotating past its locked position.

The lock portion 16a of the lock bolt 12a comprises an engagement surface 17a that engages a side surface 52a provided at an upper, inner corner of the engagement element 56a when the movable lock bolt 12a is moved to its locked position from its released position and/or vice versa. The surfaces 17a, 52a are tapered, so that the lock bolt 12a snaps into position when being moved between its locked and released positions.

Referring to Figs 11 and 12, the cabinet 1 includes a further, upper support mechanism 20 for supporting the cabinet frame 5 on the back plate 3 when the cabinet frame 5 is positioned to be attached to the back plate 3 before the lock bolts 12a, 12b are activated to lock the cabinet frame 5 to the back plate 3. This support mechanism 20 is provided at a top of the back plate 3. In the locked positions of the lock bolts 12a, 12b, the lock bolts 12a, 12b fixate bottom corner portions of the cabinet frame 5 to associated bottom corner portions of the back plate 3. The support mechanism 20 fixates top corner portions of the cabinet frame 5 to associated top corner portions of the back plate 3. The support mechanism 20 includes a downwardly projecting flange 201 of the top plate 55, the flange 201 extending along the back plate 3. The flange 201 engages two associated upwardly projecting flanges 203a, 203b of the back plate 3, the flanges 203a, 203b also forming part of the support mechanism 20. Referring also to Fig. 4, the flanges 203a, 203b of the back plate 3 each includes a recess 204a, 204b, respectively, on which recess 204a, 204b the flange 201 of the top plate 55 rests when the cabinet frame 5 is positioned to be attached to the back plate 3. The flange 201 is a bent or folded part of the top plate 55. This bent or folded part is bent or folded downwards towards a bottom of the cabinet 1. Similarly, the flanges 203a, 203b of the back plate 3 are bent or folded parts of the back plate 3.

Referring to Figs 1, 11, and 13, the cabinet 1 further comprises a door lock 58 with a keyhole 59, wherein activation of the door lock 58, using a not shown special key inserted into keyhole 59 and rotated, locks the cabinet door 57 in the closed position of the cabinet door 57. The door lock includes a lock casing 581 provided in the door 57. The lock casing 581 includes the keyhole 59. A rotatable lock bolt 582 of the door lock 58 engages a portion of the top plate 55.

When the cabinet 1 of the embodiment of Figs 1 to 13 has been installed, i.e. mounted on the not shown building wall, the district heating system components having been installed and connected to the supply grid and the building heating system, and an operator needs to access the interior of the cabinet spacing 2 in order to carry out maintenance of the components, the operator can follow this procedure:
The operator inserts the not shown special key into the keyhole 59 of the door lock 58 of the locked cabinet door 57 and turns the special key to unlock the cabinet door 57. Then, the operator opens the cabinet door 57 to provide access to the locking mechanisms 10a, 10b, the lock bolts 12a, 12b being in their locked positions. Using one hand for each, the operator grips the finger or hand grip element 14a of the associated lock bolt 12a, 12b and rotates the lock bolts 12a, 12b to their respective released positions. The lock bolt 12a is moved clockwise, and the lock bolt 12b counterclockwise. A few degrees rotation, such as 10 or 20 degrees, is enough to release the lock bolts 12a, 12b. The operator lifts up the cabinet frame 5 to detach it from the back plate 3 and, then, puts down the cabinet frame 5, e.g. on the ground. Hereby, room is provided to work on the not shown district heating system components accommodated in the cabinet spacing 2. When the maintenance work is completed, this procedure is carried out by the operator in reverse order in order to bring the cabinet back to its initial state. Except for unlocking and locking the cabinet door 57, all steps concerning detaching and reattaching the cabinet frame 5 can be carried out without the use of any tools except the operator's hands. No screws or like detachable attachment means are detached and can be dropped during the operation.

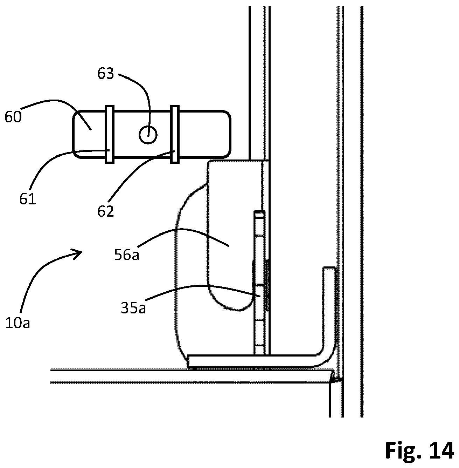

Fig. 14 shows an embodiment of the locking mechanism 10a alternative to the above locking mechanism 10a of the embodiment of the cabinet 1 of Figs 1 to 13. The locking mechanism of Fig. 14 includes a slidable lock bolt 60 which is slidably mounted on the back plate 3 via slide brackets 61, 62 to be horizontally slidable between a locked position, shown in Fig. 14, and a released position where the lock bolt 60 is slid towards left in Fig. 14. The lock bolt 60 includes an outwardly projecting hand or finger grip element 63. An identical, but mirrored, locking mechanism can be provided in replacement of the locking mechanism 10b of the embodiment of Figs 1 to 13.

Within the framework of the present invention, a person skilled in the art can devise other alternatively movable lock bolts.

### List of reference signs of the drawings:

- 1: Cabinet
- 2: Cabinet spacing
- 3: Back plate
- 31: Mounting bracket
- 32: Mounting bracket
- 33: Through-opening
- 34: Screws
- 35a: First holding element
- 36: Screw holes
- 37: Back surface of back plate
- 39: Front surface of back plate
- 5: Cabinet frame
- 51: Side plate
- 52a: Side surface
- 53: Side plate
- 54: Door opening
- 55: Top plate
- 56a: Engagement element
- 57: Cabinet door
- 58: Door lock
- 581: Lock casing
- 582: Rotatable lock bolt
- 59: Keyhole
- 60: Slidable lock bolt
- 61: Slide bracket
- 62: Slide bracket
- 63: Hand or finger grip element
- 7: Skirt
- 71: Front plate
- 72: Side plate
- 73: Side plate
- 74: Screws
- 9: Bottom through opening
- 10a: First locking mechanism
- 11a: Washer
- 12a: First rotatable lock bolt
- 12b: Second rotatable lock bolt
- 13a: Threaded nut
- 14a: Hand or finger grip element
- 15a: Foot
- 16a: Lock portion
- 17a: Engagement surface
- 18a: Threaded rod
- 19a: Through-hole
- 20: Support mechanism
- 201: Flange of the top plate 55
- 203a: Flange of the back plate 3
- 203b: Flange of the back plate 3
- 204a: Recess of flange 203a
- 204b: Recess of flange 203b

## Claims

1. A district heating system cabinet (1) for being mounted on a building wall for accommodating one or more district heating system components, such as one or more valves and/or tubing, the cabinet (1) comprising:
a bottom through-opening (9) for connecting one or more of the district heating system components to a district heating supply grid,
a back plate (3) for being mounted on the building wall, the back plate (3) comprising one or more through-openings (33) for connecting the one or more district heating system components to a building heating system, and
a cabinet frame (5) comprising two side plates (51, 53), a top plate (55), and a cabinet door (57), the cabinet frame (5) being removably attachable to the back plate (3), the cabinet frame (5), cabinet door (57), and back plate (3) defining a cabinet spacing (2) when the cabinet frame (5) is attached to the back plate (3) and the cabinet door (57) is closed, the cabinet spacing (2) being for accommodating the one or more district heating system components, at least one of the back plate (3) and side plates (51, 53) comprising thermal wall insulation,
**characterized in that** the cabinet (1) further comprises:
a locking mechanism (10a, 10b) comprising a movable lock bolt (12a, 12b) mounted on the back plate (3) inside the cabinet spacing (2), the movable lock bolt (12a, 12b) being movable between a locked position and a released position, the movable lock bolt (12a, 12b) in the locked position locking the cabinet frame (5) to the back plate (3), the movable lock bolt (12a, 12b) in the released position releasing the cabinet frame (5) from the back plate (3) so that the cabinet frame (5) can be removed from the back plate (3).

2. A district heating system cabinet (1) according to claim 1, wherein the back plate (3) has a back surface (37) for facing the building wall and a front surface (39) opposite to said back surface, and wherein the movable lock bolt (12a, 12b) is movably mounted to the front surface of the back plate (3).

3. A district heating system cabinet (1) according to claim 1 or 2,
wherein the back plate (3) comprises a holding element (35a), and the cabinet frame (5) comprises an associated engagement element (56a) for engaging the holding element (35a) when the cabinet frame (5) is attached to the back plate (3),
wherein the movable lock bolt (12a, 12b), in its locked position, engages said engagement element (56a) to prevent disengagement of the engagement element (56a) from the holding element (35a), and
wherein the movable lock bolt (12a, 12b), in its released position, disengages the engagement element (56a), so that the cabinet frame (5) can be removed from the back plate (3).

4. A district heating system cabinet (1) according to any one of the previous claims, wherein the movable lock bolt (12a, 12b) includes a hand or finger grip element (14a, 14b), upon activation of which by a hand or finger, the movable lock bolt (12a, 12b) can be moved between its locked and released positions.

5. A district heating system cabinet (1) according to any one of the previous claims, wherein the movable lock bolt (12a, 12b) comprises a surface (17a) that engages a surface of the engagement element (56a) when the movable lock bolt (12a, 12b) is moved to the locked position from the released position and/or vice versa, wherein one or both said surfaces is/are tapered, so that the movable lock bolt (12a, 12b) snaps into position when being moved between the locked and released positions.

6. A district heating system cabinet (1) according to any one of the previous claims, wherein the movable lock bolt (12a, 12b) is rotatable between the locked and released positions.

7. A district heating system cabinet (1) according to claim 6, wherein the movable lock bolt comprises an abutment element (15a) which abuts a portion of the back plate (3) and/or of the cabinet frame (5) if it is attempted to rotate the movable lock bolt (12a, 12b) further after having rotated the movable lock bolt (12a, 12b) to its locked position so as to prevent the movable lock bolt (12a, 12b) from rotating past its locked position.

8. A district heating system cabinet (1) according to claim 4 and 7, wherein the abutment element (15a) is a foot (15a) provided at an end of the hand or finger grip element (14A, 14B), said end being opposite to a rotating axis of the movable lock bolt (12a, 12b), the foot (15a) being provided farther from the rotating axis of the movable lock bolt than an engagement surface (17a) of the movable lock bolt (12a, 12b), the engagement surface (17a) of the movable lock bolt (12a, 12b) being for engaging another part of the cabinet (1) in the locked position of the movable lock bolt (12a, 12b), the foot (15a) comprising a projection extending towards the back plate (3).

9. A lock bolt (12a, 12b) for a locking mechanism for locking a cabinet frame (5) of a district heating system cabinet (1) to a back plate (3) of the district heating system cabinet (1),
wherein the lock bolt (12a, 12b) is for being mounted on the back plate (3) inside a cabinet spacing (2) of the cabinet (1) so that the lock bolt (12a, 12b) is movable between a locked position and an released position, the lock bolt (12a, 12b) in the locked position locking the cabinet frame (5) to the back plate (3), the lock bolt (12a, 12b) in the released position releasing the cabinet frame (5) from the back plate (3) so that the cabinet frame (5) can be removed from the back plate (3),
wherein the lock bolt (12a, 12b) is adapted to be rotated between the locked and released positions about a rotating axis provided by a through hole (19a) extending through the lock bolt (12a, 12b),
wherein the lock bolt includes a hand or finger grip element (14a), upon activation of which by a hand or finger, the lock bolt (12a, 12b) can be rotated between its locked and released positions,
wherein the lock bolt (12a, 12b) comprises an abutment element (15a) for abutting a portion of the back plate (3) and/or of the cabinet frame (5) if it is attempted to rotate the lock bolt (12a, 12b) further after having rotated the lock bolt (12a, 12b) to its locked position so as to prevent the lock bolt (12a, 12b) from rotating past its locked position, and
wherein the abutment element (15a) is a foot (15a) provided at an end of the hand or finger grip element (14a), said end being opposite to the rotating axis of the lock bolt (12a, 12b), the foot (15a) being provided farther from the rotating axis of the lock bolt (12a, 12b) than an engagement surface (17a) of the lock bolt (12a, 12b), the engagement surface (17a) of the lock bolt (12a, 12b) being for engaging another part of the cabinet (1) in the locked position of the lock bolt (12a, 12b), the foot (15a) comprising a projection extending towards the back plate (3).

10. A lock bolt (12a, 12b) according to claim 9, wherein the lock bolt (12a, 12b) comprises a surface (17a) for engaging a tapered surface of an engagement element of the cabinet when the lock bolt (12a, 12b) is moved to the locked position from the released position and/or vice versa, wherein, potentially, said lock bolt surface (17a) is tapered, so that the movable lock bolt (12a, 12b) snaps into position when being moved between the locked and released positions, wherein said lock bolt surface (17a) is potentially a side surface of a, potentially plate-shaped, lock portion (16a) of the lock bolt (12a, 12b).

11. A lock bolt (12a, 12b) according to claim 9 or 10,
wherein the lock bolt (12a, 12b) is plate-shaped and/or has an oblong shape, and/or
wherein the hand or finger grip element (14a) is bent or folded from a plate-shaped element that also includes the lock portion (16a), wherein the hand or finger grip element (14a) is potentially a gripping wing, and/or
wherein the hand or finger grip element (14a) extends along substantially an entire length of a lock portion (16a) of the movable lock bolt (12a, 12b).

12. A lock bolt (12a, 12b) according to any one of claims 9 to 11, wherein the lock bolt (12a, 12b) is movable by an operator gripping the hand or finger grip element (14a) with a thumb and one or more other fingers of one hand, the operator then pushing the lock bolt sidewards and/or rotating the lock bolt.

13. A lock bolt (12a, 12b) according to any one of claims 9 to 12, wherein the lock bolt (12a, 12b) at one end includes a through-hole for a screw, rivet, threaded rod, or the like.

14. A lock bolt (12a, 12b) according to any one of claims 9 to 13, wherein the lock bolt does not include any threads or threading, and/or
the lock bolt is a latch, pawl, ratchet, latch, catch, click, detent, bar, and/or rail, and/or
the lock bolt is formed, such as bent or folded from, and or cut and/or punched, from a plate and/or from a blank or workpiece.

15. Use of a lock bolt (12a, 12b) according to any one of claims 9 to 14 for a district heating system cabinet (1).
